# EUROPEAN PATENT SPECIFICATION

(11) **EP 3 579 249 B1**
(45) Date of publication and mention of the grant of the patent: **10.04.2024**
(21) Application number: 18747743.5
(22) Date of filing: 05.02.2018
(51) Int. Cl.: H01B 1/04, C01B 32/158, D01F 9/127, H01B 5/02, B82Y 30/00, B82Y 40/00, C01B 32/162, C01B 32/168, C01B 32/174, D01F 9/12, D02G 3/36, D02G 3/44

(54) **CARBON NANOTUBE WIRE, METHOD FOR MANUFACTURING CARBON NANOTUBE, AND METHOD FOR MANUFACTURING CARBON NANOTUBE WIRE**
KOHLENSTOFFNANORÖHRCHENDRAHT, VERFAHREN ZUR HERSTELLUNG EINES KOHLENSTOFFNANORÖHRCHENS UND VERFAHREN ZUR HERSTELLUNG EINES KOHLENSTOFFNANORÖHRCHENDRAHTS
FIL DE NANOTUBE DE CARBONE, PROCÉDÉ DE FABRICATION DE NANOTUBE DE CARBONE, ET PROCÉDÉ DE FABRICATION DE FIL DE NANOTUBE DE CARBONE

(30) Priority: 03.02.2017 JP 2017018634
(43) Date of publication of application: 11.12.2019
(73) Proprietor: Furukawa Electric Co., Ltd., Chiyoda-ku Tokyo 100-8322 (JP)
(72) Inventor: YAMAZAKI Satoshi, Tokyo 100-8322 (JP); KAZAMA Yoshinori, Tokyo 100-8322 (JP); YAMASHITA Satoshi, Tokyo 100-8322 (JP); FUJIMURA Koji, Tokyo 100-8322 (JP); TANIMURA Yuudai, Tokyo 100-8322 (JP); NAKAI Yukako, Tokyo 100-8322 (JP); MIYOSHI Kazutomi, Tokyo 100-8322 (JP); AIZAWA Hideki, Tokyo 100-8322 (JP); HATAMOTO Kenji, Tokyo 100-8322 (JP)
(74) Representative: Zacco GmbH
(86) International application number: PCT/JP2018/003877
(87) International publication number: WO 2018/143466

(56) References cited:
- WO-A1-2010/022164
- JP-A- 2005 097 024
- JP-A- 2005 502 792
- JP-A- 2009 149 503
- JP-A- 2014 517 797
- JP-A- 2014 530 964
- JP-A- 2016 017 005
- US-A1- 2015 318 069
- LEI SHI ET AL: "Ultra-thin double-walled carbon nanotubes: A novel nanocontainer for preparing atomic wires", NANO RESEARCH, vol. 4, no. 8, 7 April 2011 (2011-04-07), pages 759-766, XP055737551, CN ISSN: 1998-0124, DOI: 10.1007/s12274-011-0132-y
- YOUSHENG TAO ET AL: "Dramatic change of water-cluster accessibility of highly pure double-walled carbon nanotubes with high temperature annealing", NANOSCALE, vol. 4, no. 16, 9 July 2012 (2012-07-09), page 4960, XP055737537, United Kingdom ISSN: 2040-3364, DOI: 10.1039/c2nr30876b
- DATABASE WPI Week 201177 5 October 2011 (2011-10-05) Thomson Scientific, London, GB; AN 2011-N83992 XP002800628, -& CN 102 205 957 A (UNIV SHANGHAI) 5 October 2011 (2011-10-05)
- SHAH KHURSHED A ET AL: "Synthesis of carbon nanotubes by catalytic chemical vapour deposition: A review on carbon sources, catalysts and substrates", MATERIALS SCIENCE IN SEMICONDUCTOR PROCESSING, vol. 41, 31 January 2016 (2016-01-31), pages 67-82, XP029306670, ISSN: 1369-8001, DOI: 10.1016/J.MSSP.2015.08.013

## Description

### Technical Field

The present invention relates to a carbon nanotube wire made by bundling carbon nanotube aggregates each constituted of a plurality of carbon nanotubes, a method for manufacturing a carbon nanotube, and a method for manufacturing a carbon nanotube wire.

### Background Art

Electric wires constituted of a core wire composed of a wire or a plurality of wires, and an insulating coating to coat the core wire are conventionally used as power lines and signal lines in various fields such as automobiles and industrial equipment. Though copper or copper alloys are usually used as materials of the wires constituting the core wires from the viewpoint of electric properties, aluminum or aluminum alloys have recently been proposed from the viewpoint of weight reduction. For example, the specific gravity of aluminum is approximately 1/3 times the specific gravity of copper, and the electroconductivity of aluminum is approximately 2/3 times the electroconductivity of copper (on the basis of 100% IACS of pure copper, pure aluminum is approximately 66% IACS); although in order to make the same current flow in an aluminum wire as in a copper wire, the cross sectional area of the aluminum wire needs to be made approximately 1.5 times as large as the cross-sectional area of the copper wire, even if the aluminum wire whose cross-sectional area has been made thus large is used, since the mass of the aluminum wire is approximately half the mass of the pure copper wire, use of the aluminum wire is advantageous from the viewpoint of weight reduction.

On the above background, the performance enhancement and function enhancement of automobiles, industrial equipment and the like have been progressed, and along therewith, it is likely that the number of installations of various types of electric devices, controllers and the like will increase, while also the number of wiring of electric wiring bodies to be used for these devices will increase. On the other hand, in order to improve fuel efficiency of moving bodies such as automobiles for environmental friendliness, weight reduction of wires is greatly demanded.

As one of new means of achieving such further weight reduction, a technology of making use of carbon nanotubes as wires has been newly proposed. The carbon nanotubes are three-dimensional mesh structural bodies constituted of a cylindrical single wall or cylindrical multi walls nearly coaxially disposed having a hexagonal lattice mesh structure, and are, since being light in weight and being excellent in properties such as electroconduction, current capacity, elasticity and mechanical strength, paid attention to as a material substituting for metals being used for power lines and signal lines.

The specific gravity of carbon nanotubes is approximately 1/5 times the specific gravity of copper (approximately 1/2 times aluminum), and carbon nanotube simple bodies have a higher electroconductivity than copper (resistivity: 1.68 × 10⁻⁶ Ω·cm). Therefore, theoretically, when a carbon nanotube wire is formed from a plurality of carbon nanotubes, materialization of further weight reduction and electroconductivity enhancement is enabled. In the case where a carbon nanotube wire in µm to mm order is fabricated from carbon nanotubes in nm order, however, since there is such a problem that the resistance value of the whole wire increases due to the contact resistance between the carbon nanotubes and internal defect formation, it is difficult to use the carbon nanotubes as they are as a wire.

Then, as one method of methods of improving electroconductivity of a carbon nanotube wire, a method of improving orientation of carbon nanotubes constituting the carbon nanotube wire is conceivable.

As a wire improved in orientation of carbon nanotubes, for example, a carbon nanotube aggregate having a carbon nanotube center yarn made by bundling carbon nanotube non-twisted yarns and carbon nanotube non-twisted yarns wound around the carbon nanotube center yarn is proposed (Patent Literature 1). In this conventional technology, it is contended that since carbon nanotubes are vertically grown on a substrate by a chemical vapor deposition method (CVD method) and a carbon nanotube non-twisted yarn is formed by drawing out the plurality of carbon nanotubes oriented vertically on the substrate, each of the plurality of carbon nanotubes constituting the carbon nanotube non-twisted yarn can be oriented along the extending direction of the carbon nanotube non-twisted yarn.

Further an aggregative structure of a multi-walled carbon nanotube fabricated by a CVD method using a substrate is disclosed in which the density of the multi-walled carbon nanotube having a linear shape and vertical orientation to the substrate surface is 50 mg/cm³ or higher and the inner diameter of the innermost wall of the multi-walled carbon nanotube is 3 nm or larger and 8 nm or smaller (Patent Literature 2). Patent Literature 3 discloses a carbon nanotube aggregate constituted of a plurality of double walled carbon nanotubes. Patent Literature 4 discloses a method for manufacturing carbon nanotube aggregate wires, comprising dispersing the carbon nanotubes in fuming sulfuric acid. Non-Patent Literature 1 describes carbon nanotube wires, being formed from carbon nanotube aggregates constituted of a plurality of double-walled carbon nanotubes.

### Document List

### Patent Literatures

Patent Literature 1: Japanese Patent Application Publication No. 2016-160539
Patent Literature 2: Japanese Patent Application Publication No. 2008-120658
Patent Literature 3: US2015/318069 A1
Patent Literature 4: WO2010/022164 A1
Non-Patent Literature 1: LEI SHI ET AL: "Ultra-thin double-walled carbon nanotubes: A novel nanocontainer for preparing atomic wires", NANO RESEARCH, vol. 4, no. 8, 7 April 2011, pages 759-766.

### Summary of Invention

### Technical Problem

With respect to the above conventional technology, however, the disclosure is confined to securing the orientation of the carbon nanotubes and seeking an improvement in the density of the carbon nanotube, and no disclosure of the relation between the orientation of the plurality of carbon nanotubes constituting the carbon nanotube wire and the electroconductivity of the carbon nanotube wire is made. In particular, in the case where a low resistivity of the carbon nanotube wire is to be materialized, only simple securing of the orientation of the plurality of carbon nanotubes is insufficient therefor and it is needed to quantitatively find out the structure and size of carbon nanotube single bodies and the degree of orientation of the plurality of carbon nanotubes.

It is an object of the present invention to provide a carbon nanotube wire capable of materializing a low resistivity and improving the electroconductivity, a method for manufacturing a carbon nanotube, and a method for manufacturing a carbon nanotube wire.

### Solution to Problem

That is, the above problem can be solved by the following invention.
(1) A carbon nanotube wire, being formed from a single carbon nanotube aggregate constituted of a plurality of carbon nanotubes each having a single- or multi-walled structure, or formed by bundling a plurality of the carbon nanotube aggregates,
   wherein the proportion of the total number of the carbon nanotubes having a double-walled or triple-walled structure based on the number of the carbon nanotubes constituting the carbon nanotube wire is 75% or higher;
   the proportion of the total number of the carbon nanotubes having an average diameter of the innermost wall of 1.7 nm or smaller based on the number of the carbon nanotubes constituting the carbon nanotube wire is 75% or higher; and
   the full-width at half maximum Δθ in azimuth angle in azimuth intensity distribution by small-angle X-ray scattering indicating orientation of the plurality of carbon nanotube aggregates is 60° or smaller.
(2) The carbon nanotube wire according to the above (1), characterized in that the full-width at half maximum Δθ in azimuth angle by small-angle X-ray scattering is 30° or smaller.
(3) The carbon nanotube wire according to the above (2), characterized in that the full-width at half maximum Δθ in azimuth angle by small-angle X-ray scattering is 15° or smaller.
(4) The carbon nanotube wire according to the above (1), characterized in that the proportion of the total number of the carbon nanotubes having a double-walled or triple-walled structure based on the total number of the carbon nanotubes constituting the carbon nanotube wire is 90% or higher.
(5) The carbon nanotube wire according to the above (1), characterized in that the proportion of the total number of the carbon nanotubes having a double-walled structure based on the total number of the carbon nanotubes constituting the carbon nanotube wire is 90% or higher.
(6) The carbon nanotube wire according to the above (1), characterized in that the carbon nanotube wire has an HCP structure formed by the plurality of carbon nanotubes, and the length in the width direction of the entire HCP structure is 3 nm or larger.
(7) The carbon nanotube wire according to the above (1), characterized in that the q value of the peak top in the (10) peak of scattering intensity by X-ray scattering is 2.0 nm⁻¹ or higher, and the full-width at half maximum Δq thereof is 2.0 nm⁻¹ or lower.
(8) The carbon nanotube wire according to the above (1), characterized in that the G/D ratio, which is a ratio of the G band to the D band originated from crystallinity, of a Raman spectrum in Raman spectroscopy, is 80 or higher.
(9) The carbon nanotube wire according to the above (1), characterized in that the length of the carbon nanotube aggregate is 10 µm or longer.
(10) The carbon nanotube wire according to the above (1), characterized in that:
   the proportion of the total number of the carbon nanotubes having a double-walled or triple-walled structure based on the total number of the carbon nanotubes constituting the carbon nanotube wire is 90% or higher;
   the proportion of the total number of the carbon nanotubes having a double-walled structure based on the total number of the carbon nanotubes constituting the carbon nanotube wire is 85% or higher;
   the proportion of the total number of the carbon nanotubes having an average diameter of the innermost wall of 1.7 nm or smaller based on the number of the carbon nanotubes constituting the carbon nanotube wire is 90% or higher;
   the full-width at half maximum Δθ in azimuth angle by the small-angle X-ray scattering is 15° or smaller;
   the G/D ratio, which is a ratio of the G band to the D band originated from crystallinity, of the Raman spectrum in Raman spectroscopy, is 150 or higher;
   the length of the carbon nanotube aggregate is 10 µm or longer; and
   the q value of the peak top in the (10) peak of scattering intensity by X-ray scattering indicating arrangement of the plurality of carbon nanotubes is 3.0 nm⁻¹ or higher, and the full-width at half maximum Δq thereof is 0.5 nm⁻¹ or lower.
(11) The carbon nanotube wire according to the above (1), characterized in that:
   the proportion of the total number of the carbon nanotubes having a double-walled or triple-walled structure based on the number of the carbon nanotubes constituting the carbon nanotube wire is 90% or higher;
   the proportion of the total number of the carbon nanotubes having a double-walled structure based on the number of the carbon nanotubes constituting the carbon nanotube wire is 85% or higher;
   the proportion of the total number of the carbon nanotubes having an average diameter of the innermost wall of 1.7 nm or smaller based on the number of the carbon nanotubes constituting the carbon nanotube wire is 90% or higher;
   the full-width at half maximum Δθ in azimuth angle by the small-angle X-ray scattering is 15° or smaller;
   the G/D ratio, which is a ratio of the G band to the D band originated from crystallinity, of the Raman spectrum in Raman spectroscopy, is 150 or higher;
   the length of the carbon nanotube aggregate is 10 µm or longer; and
   the carbon nanotube wire has an HCP structure formed by the plurality of carbon nanotubes, and the length in the width direction of the entire HCP structure is 30 nm or larger.
(12) A method for manufacturing a carbon nanotube, as described above, comprising manufacturing
   the carbon nanotube through each step of a synthesis step, a refinement step and a heat treatment step,
   the method being characterized in that in the heat treatment step, a carbon nanotube obtained in the refinement step is subjected to a heat treatment in an inert atmosphere at 1,000 to 2,200°C for 30 minutes to 5 hours.
(13) The method for manufacturing a carbon nanotube according to the above (12), characterized in that in the synthesis step, a carbon nanotube is synthesized by using decahydronaphthalene as a carbon source and a metal particle having a diameter of 2 nm or smaller as a catalyst.
(14) The method for manufacturing a carbon nanotube according to the above (12) or (13), characterized in that in the synthesis step, the synthesis temperature of the carbon nanotube is 1,300 to 1,500°C, and at least one selected from the group consisting of Co, Mn, Ni, N, S, Se and Te is mixed in the catalyst.
(15) A method for manufacturing a carbon nanotube wire, as described above, characterized in that after a plurality of carbon nanotubes are dispersed in a concentration of 0.1 to 20% by weight in a strong acid, the plurality of carbon nanotubes are aggregated.
(16) The method for manufacturing a carbon nanotube wire according to the above (15), characterized in that the strong acid contains at least one of fuming sulfuric acid and fuming nitric acid.

### Effects of Invention

According to the present invention, a carbon nanotube wire capable of materializing a low resistivity and improving electroconductivity can be provided.

### Brief Description of Drawings

[FIG. 1] FIG. 1 is a diagram to interpret a constitution of a carbon nanotube wire according to an embodiment of the present invention.
[FIG. 2] FIG. 2A is a diagram showing one example of a two-dimensional scattering image of scattering vectors q of a plurality of carbon nanotube aggregates by SAXS; and FIG. 2B is a graph showing one example of an azimuth plot indicating a relation between the azimuth angle of any scattering vector q with the position of transmitted X -ray being the origin and the scattering intensity, in the two-dimensional scattering image.
[FIG. 3] FIG. 3 is a graph showing a relation between the q value by WAXS of a plurality of carbon nanotubes constituting a carbon nanotube aggregate and the intensity thereby.

### Description of Embodiments

Hereinafter, embodiments according to the present invention will be described in detail by reference to the drawings.

### <Constitutions of a carbon nanotube wire and a carbon nanotube aggregate>

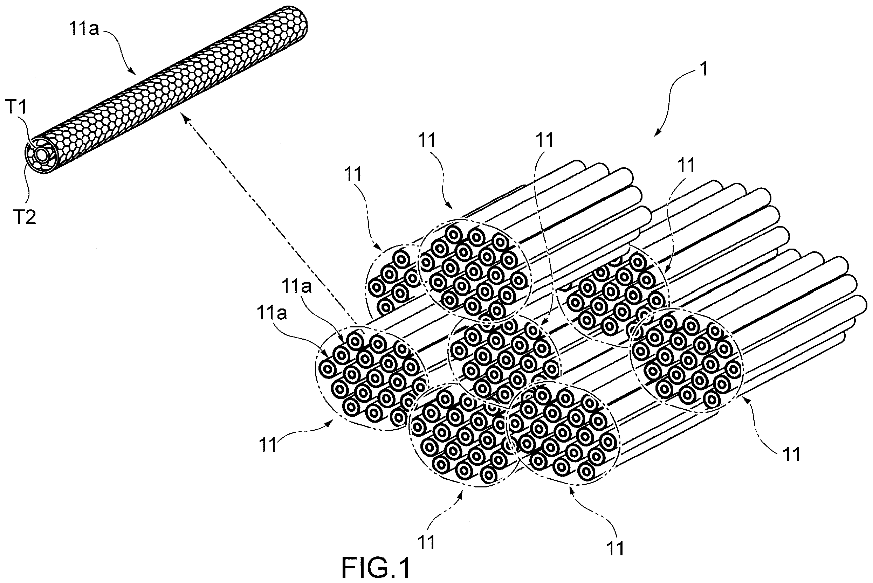

FIG. 1 is a diagram to interpret a constitution of a carbon nanotube wire according to an embodiment of the present invention. The carbon nanotube wire in FIG. 1 is one example thereof, and the constitution of the carbon nanotube wire according to the present invention is not limited to one shown in FIG. 1.

A carbon nanotube wire 1 (hereinafter, referred to as CNT wire) according to the present embodiment is, as shown in FIG. 1, formed from a single carbon nanotube aggregate 11 (hereinafter, referred to as CNT aggregate) constituted of a plurality of carbon nanotubes 11a, 11a, ··· (hereinafter, referred to as CNT) having a single- or multi-walled structure, or formed by bundling a plurality of the carbon nanotube aggregates 11. Here, the CNT wire means a CNT wire having a CNT proportion of 90% by mass or higher. Then, in the calculation of the CNT proportion in the CNT wire, masses of plating and dopants are excluded. In FIG. 1, the CNT wire 1 has a constitution in which a plurality of the CNT aggregates 11 is bundled. The longitudinal directions of the CNT aggregates 11 form the longitudinal direction of the CNT wire 1. Therefore, the CNT aggregates 11 assume a linear shape. The plurality of carbon nanotube aggregates 11, 11, ··· in the CNT wire 1 are arranged so that the longitudinal directions are nearly parallel. Therefore, the plurality of carbon nanotube aggregates 11,11, ··· in the CNT wire 1 is oriented. The outer diameter of the CNT wire 1 is 0.01 mm or larger and 4.0 mm or lower.

The CNT aggregate 11 is a bundle of CNTs having a single- or multi-walled structure. The longitudinal directions of the CNTs 11a form the longitudinal direction of the CNT aggregate 11. The plurality of CNTs 11a, 11a, ··· in the CNT aggregate 11 are arranged so that the longitudinal directions are nearly parallel. Therefore, the plurality of CNTs 11a, 11a, ··· in the CNT aggregate 11 is oriented. The circle-equivalent diameter of the CNT aggregate 11 is 20 nm or larger and 80 nm or smaller. The width size of the outermost wall of the CNT 11a is, for example, 1.0 nm or larger and 5.0 nm or smaller.

In the present embodiment, the proportion of the total number of the CNTs having an average diameter of the innermost wall of 1.7 nm or smaller based on the number of the CNTs constituting the CNT wire 1 is 75% or higher. The innermost wall, in the case of CNTs having a multi-walled structure, refers to a wall positioning on the innermost side, and in the case of a single-walled structure, refers to the single wall itself; and the average diameter of the innermost wall refers to an average value of the sum of a diameter of the above wall positioning on the innermost side and a diameter of the above single wall itself. Since it is presumed that when the diameter of the innermost wall of CNT is small, the resistance becomes low, in the present embodiment, the proportion of the total number of the carbon nanotubes having an average diameter of the innermost wall of 1.7 nm or smaller based on the number of the CNTs constituting the CNT wire 1 is made in the above range.

### <Constitutions of CNTs>

The CNTs 11a constituting the CNT aggregate 11 are cylindrical bodies having a single-walled structure or a multi-walled structure, which are, respectively, called SWNT (single-walled nanotube) or MWNT (multi-walled nanotube). Although in FIG. 1, for convenience, only CNTs having a double-walled structure are shown, the CNT aggregate 11 may contain CNTs having a triple- or multi-walled structures or also CNTs having a single-walled structure, and the CNT aggregate 11 may be formed from CNTs having triple- and multi-walled structures or CNTs having a single-walled structure.

The CNT 11a having a double-walled structure is a three-dimensional mesh structural body in which two cylindrical bodies T1, T2 (hereinafter, referred to also simply as "walls") each having a hexagonal-lattice mesh structure are nearly coaxially arranged, and is called a DWNT (double-walled nanotube). The hexagonal lattice being a structural unit is a 6-membered ring on whose vertices carbon atoms are disposed, and which adjoin other 6-membered rings and these rings are continuously bonded.

The properties of the CNT 11a depends on the chirality of the cylindrical body as described above. The chirality is roughly classified into an armchair type, a zigzag type and other chiral types, and the armchair type exhibits metallic behavior; the chiral type, semiconductive and semimetallic behavior; and the zigzag type, semiconductive and semimetallic behavior. Hence, the electroconductivity of the CNT largely depends on what chirality the CNT has. In the CNT aggregate, from the viewpoint of improving the electroconductivity, it is preferable to increase the proportion of CNTs of armchair type exhibiting metallic behavior.

Meanwhile, it is known that by doping a CNT of chiral type exhibiting semiconductive behavior with an electron-donating or an electron-accepting substance (heterogeneous element), the CNT exhibits metallic behavior. Further in common metals, by doping the metals with a heterogeneous element, scattering of conduction electrons in the metal interior is caused to reduce the electroconductivity, and in the case where a CNT exhibiting metallic behavior is doped with a heterogeneous element, reduction of the electroconductivity is similarly caused.

Since it can be said that the doping effects on a CNT exhibiting metallic behavior and on a CNT exhibiting semiconductive behavior, from the viewpoint of the electroconductivity, are thus in a tradeoff relation, theoretically, it is desirable that the CNT exhibiting metallic behavior and the CNT exhibiting semiconductive behavior are separately fabricated, and the semiconductive CNT only is subjected to a doping treatment, and thereafter, these are combined. In the case where the CNT exhibiting metallic behavior and the CNT exhibiting semiconductive behavior are fabricated in a mixed state, in order to further improve the electroconductivity of a CNT wire composed of the mixture of the metallic CNT and the semiconductive CNT, it is preferable to select a CNT wall structure making a doping treatment with a heterogeneous element or a molecule to become effective. The electroconductivity of the CNT wire 1 composed of the mixture of the CNT exhibiting metallic behavior and the CNT exhibiting semiconductive behavior can be thereby further improved.

For example, CNTs having a smaller number of walls like a double-walled or triple-walled structure are relatively higher in electroconductivity than CNTs having a larger number of walls. Then, a dopant is introduced in the interior of the innermost wall of CNTs or in the spaces between CNTs formed by a plurality of CNTs. Although the doping effect develops by a dopant being introduced in the interior of CNTs, in the case of multi-walled CNTs, it becomes difficult for the doping effect of tubes positioning in the interior not contacting with the outermost wall and the innermost wall to develop. For reasons described above, when CNTs having a multi-walled structure are subjected to a doping treatment, the doping effect is largest on CNTs having a double-walled or triple-walled structure. Then, the dopant is often a reagent exhibiting strong electrophilicity or nucleophilicity and being high in reactivity. Since CNTs having a single-walled structure are weaker in rigidity than CNTs having a multi-walled structure and inferior in chemical resistance thereto, when the single-walled CBTs are subjected to a doping treatment, the structure of the CNTs themselves is broken in some cases.

Therefore, from the viewpoint of improving the electroconductivity of the CNT wire 1, the proportion of CNTs having a double-walled or triple-walled structure is increased. Specifically, the proportion of the number of CNTs having a double-walled or triple-walled structure based on the total number of the CNTs constituting the CNT wire is 75% or higher, and preferably 90% or higher. The proportion of the CNTs having a double-walled or triple-walled structure can be calculated by observing and analyzing the cross section of the CNT aggregate 11 by a transmission electron microscope (TEM), and measuring the number of walls of each of 100 CNTs.

Further from the viewpoint of further improving the electroconductivity of the CNT wire 1, it is preferable that the proportion of the total number of CNTs having a double-walled structure based on the total number of the CNTs constituting the CNT wire 1 is 80% or higher; and being 85% or higher is more preferable.

Further in the CNT wire 1 according to the present embodiment, it is preferable that the G/D ratio, which is a ratio of the G band to the D band originated from crystallinity, of a Raman spectrum in Raman spectroscopy, is 80 or higher; being 100 or higher is more preferable; and being 155 or higher is still more preferable. The D band emerges in the vicinity of a Raman shift of 1,350 cm⁻¹, and can also be said to be a peak of the spectrum originated from defects. Hence, the ratio of the D band to the G band (G/D ratio) is used as an indication of the amount of defects; and it is judged that the higher the G/D ratio, the fewer the defects in CNT. When the G/D ratio is lower than 80, the crystallinity is low and it becomes difficult for good electroconductivity to be attained. Hence, the G/D ratio in a Raman spectrum is made to be in the above range.

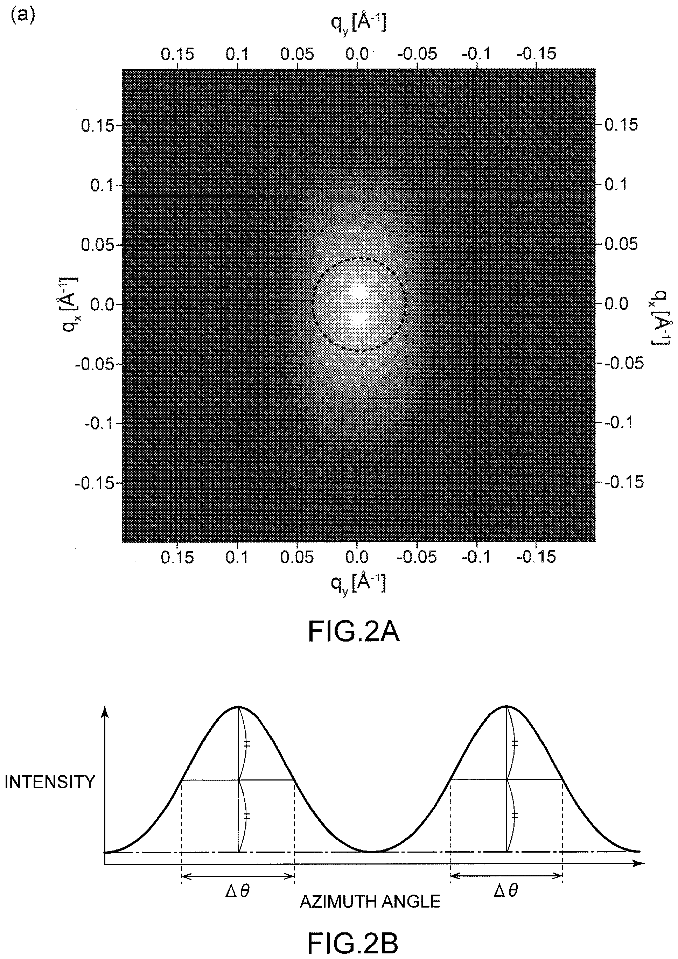

FIG. 2A is a diagram showing one example of a two-dimensional scattering image of scattering vectors q of a plurality of carbon nanotube aggregates 11, 11, ··· by small angle X-ray scattering (SAXS); and FIG. 2B is a graph showing one example of an azimuth plot indicating a relation between the azimuth angle of any scattering vector q with the position of transmitted X-ray being the origin and the scattering intensity, in the two-dimensional scattering image.

SAXS is suitable for evaluating structures of several nanometers to several tens of nanometers in size, and the like. For example, by using SAXS and analyzing the information of an X-ray scattering image by the following process, the orientation of the CNTs 11a of several nanometers in outer diameter and the orientation of the CNT aggregates 11 of several tens of nanometers in outer diameter can be evaluated. For example, when an X-ray scattering image of the CNT wire 1 is analyzed, as shown in FIG. 2A, values of q_{y} being the y components of scattering vectors q (q = 2π/d, d is a lattice interplanar spacing) of the CNT aggregate 11 are more narrowly distributed than values of qₓ being the x components thereof. Further for the same CNT wire 1 as in FIG. 2A, as a result of analysis of an azimuth plot of SAXS, the full-width at half maximum Δθ in azimuth angle in the azimuth plot shown in FIG. 2B is 48°. From these analysis results, it can be said that in the CNT wire 1, the plurality of CNTs 11a, 11a, ··· and the plurality of CNT aggregates 11, 11, ··· have good orientation. Here, the orientation refers to the angular differences of vectors of interior CNTs and CNT aggregates from the vector V in the longitudinal direction of a twisted wire fabricated by collectively twisting CNTs.

Then, in the present embodiment, the full-width at half maximum Δθ in azimuth angle in azimuth intensity distribution by small-angle X-ray scattering (SAXS) indicating orientation of the plurality of CNT aggregates 11, 11, ··· is 60° or smaller, preferably 50° or smaller, more preferably 30° or smaller and still more preferably 15° or smaller. When the full-width at half maximum Δθ in azimuth angle exceeds 60°, the orientation of the plurality of CNT aggregates 11 constituting the CNT wire 1 is inferior and the resistivity of the CNT wire 1 becomes high. By contrast, when the full-width at half maximum Δθ in azimuth angle is 60° or smaller, the orientation of the plurality of CNT aggregates 11 is good; and contact points between CNT aggregates 11, 11, that is, CNT bundles increase and the contact resistance between the CNT aggregates 11, 11 decreases, and consequently the resistivity of the CNT wire 1 becomes low. Further when the full-width at half maximum Δθ is 30° or smaller, the orientation of the plurality of CNT aggregates 11 is very good; and further when the full-width at half maximum Δθ in azimuth angle is 15° or smaller, the orientation of the plurality of CNT aggregates 11 is remarkably good, and the resistivity of the CNT wire 1 becomes further low. Therefore, the range of the full-width at half maximum Δθ in azimuth angle is made to be in the above range.

Further, on condition that: the proportion of the total number of the carbon nanotubes having a double-walled or triple-walled structure based on the total number of the carbon nanotubes constituting the carbon nanotube wire is 90% or higher; the proportion of the total number of the carbon nanotubes having a double-walled structure based on the total number of the carbon nanotubes constituting the carbon nanotube wire is 85% or higher; the proportion of the total number of the carbon nanotubes having an average diameter of the innermost wall of 1.7 nm or smaller based on the number of the carbon nanotubes constituting the carbon nanotube wire is 90% or higher; the G/D ratio, which is a ratio of the G band to the D band originated from crystallinity, of a Raman spectrum in Raman spectroscopy, is 150 or higher; and the length of the carbon nanotube aggregate is 10 µm or longer, (i) when the q value of the peak top in the (10) peak of scattering intensity by X-ray scattering indicating arrangement of the plurality of carbon nanotubes is 3.0 nm⁻¹ or higher, and the full-width at half maximum Δq thereof is 0.5 nm⁻¹ or lower, or (ii) when the CNT wire has an HCP structure (hexagonal close-packed) formed by the plurality of carbon nanotubes, and the length in the width direction of the entire HCP structure is 30 nm or larger, and further the full-width at half maximum Δθ of the CNTs constituting the HCP structure is 15° or smaller, the improvement of the electroconductivity of the CNT wire becomes more remarkable.

Then, the arrangement structure and the density of the plurality of CNTs 11a constituting the CNT aggregate 11 will be described.

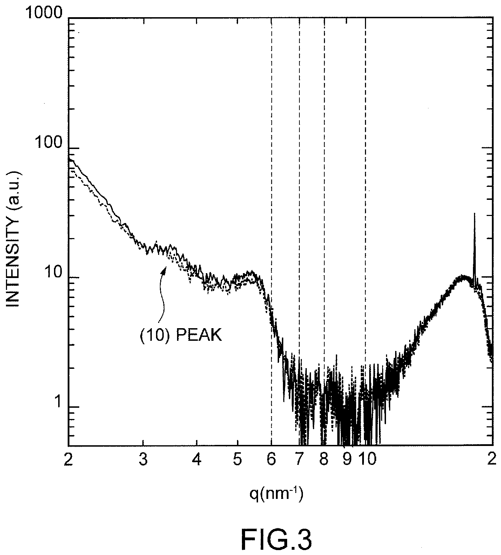

FIG. 3 is a graph showing a relation between the q values by WAXS (wide angle X-ray scattering) of the plurality of CNTs 11a, 11a. ··· constituting the CNT aggregate 11 and the intensity thereby.

WAXS is suitable for evaluating structures of substances of several nanometers or smaller in size, and the like. For example, by using WAXS and analyzing the information of an X-ray scattering image by the following process, the density of the CNT 11a of several nanometers or smaller in outer diameter can be evaluated. For any one CNT aggregate 11, by analyzing the relation between the scattering vector q and the intensity, as shown in FIG. 3, a value of the lattice constant estimated from the q value of the peak top in the (10) peak observed in the vicinity of q = 1 nm⁻¹ to 5 nm⁻¹, particularly q = 3.0 nm⁻¹ to 4.0 nm⁻¹ is measured. Based on the measurement value of the lattice constant and the diameter of the CNT aggregate observed by Raman spectroscopy, TEM and the like, it can be confirmed that the CNTs 11a, 11a, ··· form an HCP structure in a cross-sectional view.

CNTs having a single to 10-tuple walls gather in a plural number thereof and aggregate rather than being present as single bodies. In the aggregation, the aggregate takes a structure more stable in terms of energy in which a larger contact area is made by stacking in the width direction than in the case of a CNT structure having a high aspect ratio. In particular, when the diameters of single- to triple-walled CNTs are uniform, the stacking structure is likely to take an HCP structure. The HCP structure is formed by having, as a constituting unit, a two-dimensional crystal having the diameter of one piece of CNT as its size, and a diffraction peak of the lowest index (10) originated from the periodic structure is detected between q = 1 nm⁻¹ to 5 nm⁻¹.

Therefore, it can be said that the diameter distribution of the plurality of CNT aggregates in the CNT wire 1 is narrow and the plurality of CNTs 11a, 11a, ··· are arranged with regularity, that is, give a high density to thereby form the HCP structure.

Then in the present embodiment, it is preferable that the q value of the peak top in the (10) peak of intensity by X-ray scattering is 2.0 nm⁻¹ or higher, and the full-width at half maximum Δq (FWHM) thereof is 2.0 nm⁻¹ or lower; and it is more preferable that the q value of the peak top is 3.0 nm⁻¹ or higher, and the full-width at half maximum Δq (FWHM) is 0.5 nm⁻¹ or lower. Further at this time, the full-width at half maximum Δq (FWHM) is, for example, 0.1 nm⁻¹ or higher. When the q value of the peak top in the (10) peak of intensity is 2.0 nm⁻¹ or higher, and the full-width at half maximum Δq thereof is 2.0 nm⁻¹ or lower, since the diameter distribution of the plurality of CNTs 11a in the CNT aggregate 11 is narrow and the plurality of CNTs 11a, 11a, ··· are arranged with regularity and form the HCP structure, contact points between the CNTs 11a, 11a, that is, between CNT single bodies increase and the contact resistance between the CNTs can be made low. Hence, the q value of the peak top in the (10) peak of intensity and the full-width at half maximum Δq thereof are made to be values in the above ranges.

It is preferable that in the CNT aggregate 11, the plurality of CNTs 11a, 11a, ··· thus form the HCP structure, and the fact that the CNTs 11a, 11a, ··· constituting at least a part of the CNT wire 1 form the HCP structure can also be confirmed by observing and analyzing a cross section of the CNT wire 1 by a transmission electron microscope (TEM). At this time, the CNT wire 1 has the HCP structure formed of the plurality of the CNTs 11a, 11a, ···, and it is preferable that the length in the width direction of the entire HCP structure is 3 nm or larger; being 10 nm or larger is more preferable; and being 30 nm or larger is still more preferable.

Further from the viewpoint of reducing the contact resistance in the longitudinal direction of the CNT wire 1 and further improving the electroconductivity, it is preferable that the length of the CNT aggregate 11 is 10 µm or larger. The length of the CNT aggregate 11 can be measured by observing the CNT aggregate 11 by using a scanning electron microscope or an atomic force microscope and determining an average value of lengths measured using image software.

### (Methods for manufacturing the CNTs and the CNT wires)

CNTs can be manufactured, for example, through each step of a synthesis step, a refinement step and a heat treatment step.

The synthesis step can use means of a floating catalyst method (Japanese Patent No. 5819888), a substrate method (Japanese Patent No. 5590603) or the like.

In the synthesis step, as a first carbon source, there can be used, for example, one selected from the group consisting of decahydronaphthalene (decalin), toluene, benzene, hexane, cyclohexane, o-xylene, ethylbenzene, cyclohexane and ethylcyclohexane, or a plurality thereof. As a second carbon source to be added to the first carbon source, there can be used, for example, one selected from the group consisting of ethylene, methane and acetylene, or a plurality thereof. As a catalyst, there can be used, for example, a ferrocene single body, or a substance obtained by mixing ferrocene as a main component with one of cobaltocene, nickelocene and magnetrocene so that the one becomes 10% or less with respect to the molecular weight of ferrocene.

Further it is preferable that CNTs are synthesized by using decahydronaphthalene as the first carbon source and using a metal particle of 2 nm or smaller in average diameter as the catalyst. Thereby, the size of crystallites of the HCP structure formed in CNT wires 1 can be made large and the contact resistance between CNTs can be made further low. Examples of the metal particle include iron catalyst particles. Further, a reaction accelerator such as thiophene may be added to starting raw materials like the above.

In the synthesis step, it is preferable that the synthesis temperature of CNT is 1,300 to 1,500°C and as a catalyst for CNT growth, it is preferable that to the above catalyst, there is mixed at least one selected from the group consisting of cobalt (Co), manganese (Mn), nickel (Ni), nitrogen (N), sulfur (S), selenium (Se) and tellurium (Te). At this time, it is preferable that a misted raw material is blown at 8 to 12 L/min into a furnace by a hydrogenated gas. The flowability of the catalyst is thereby improved, so that the length of the CNT aggregate 11 can be made longer and the contact resistance in the longitudinal direction of CNT wires 1 can be made lower.

In the refinement step, for example, the synthesized CNTs are put in a pressure vessel, filled with water, heated at 80 to 200°C for 0.5 hours to 3.0 hours, and thereafter, fired in an atmospheric pressure at 450 to 600°C for 0.5 hours to 1.0 hour, and cleared of the metal catalyst with a strong acid such as hydrochloric acid. Thereby, amorphous carbon, which has not been converted to the CNTs, can be removed and the CNTs can sufficiently be refined.

In the heat treatment step, it is preferable that the CNTs obtained in the refinement step are annealed in an inert atmosphere at 1,000 to 2,200°C, preferably 1,500 to 2,200°C and more preferably 1,800 to 2,200°C for 30 minutes to 5 hours. When the temperature exceeds 2,200°C, neighboring CNTs contacts with one another and it becomes difficult to retain the diameter of the CNTs. Thereby, CNTs having fewer defects can be fabricated.

Fabrication of a CNT wire from the fabricated CNTs can be carried out by dry spinning (Japanese Patent No. 5819888, Japanese Patent No. 5990202, and Japanese Patent No. 5350635), wet spinning (Japanese Patent No. 5135620, Japanese Patent No. 5131571, and Japanese Patent No. 5288359), liquid crystal spinning (National Publication of International Patent Application No. 2014-530964) or the like.

The orientation of the CNT aggregates and the CNTs and the arrangement structure and the density of the CNTs can be regulated by suitably selecting a spinning method such as dry spinning, wet spinning or liquid crystal spinning, and a spinning condition. At this time, after the plurality of CNTs is dispersed in a concentration of 0.1 to 20% by weight in the above strong acid, the plurality of CNTs are aggregated. For example, it is preferable that after the plurality of the CNTs obtained by the above manufacturing method are dispersed in a concentration of 0.1 to 20% by weight in one of fuming sulfuric acid, fuming nitric acid, concentrated sulfuric acid and concentrated nitric acid or a strong acid containing a plurality thereof, the plurality of CNTs are aggregated.

In particular, in dispersing of the CNTs, it is preferable that the strong acid as a solvent of the CNTs contains at least one of fuming sulfuric acid and fuming nitric acid. Thereby, the orientation of the CNTs can greatly be improved. For example, in the case where fuming sulfuric acid is used as a solvent, the CNTs are dispersed in the solvent so as to make a concentration of 0.1 to 20% by weight. Then at this time, it is preferable to add ultrasonic waves to the solvent. Thereby, the CNTs can be dispersed more homogeneously and the orientation can be improved more.

As described above, according to the present embodiment, since: the proportion of the total number of CNTs having a double-walled or triple-walled structure based on the total number of the CNTs 11a constituting the CNT wire 1 is 75% or higher; the proportion of the total number of the CNTs having an average diameter of the innermost wall of 1.7 nm or smaller based on the number of the CNTs 11a constituting the CNT wire 1 is 75% or higher; and further the full-width at half maximum Δθ in azimuth angle in azimuth intensity distribution by small-angle X-ray scattering indicating orientation of the plurality of CNT aggregates 11 is 60° or smaller, the proportion of the CNTs having a double-walled or triple-walled structure is high, so that the electroconductivity becomes high, and the proportion of the CNTs having a small innermost wall diameter is high, so that the resistivity can be made low. Further since the orientation of the plurality of the CNT aggregates 11 in the CNT wire 1 is high, the contact resistance between the CNT aggregates 11 can be made low. Hence, the CNT wire 1 capable of materializing a low resistivity and improving the electroconductivity can be provided.

Further since: the q value of the peak top in the (10) peak by X-ray scattering indicating arrangement of the plurality of CNTs 11a is 2.0 nm⁻¹ or higher; and the full-width at half maximum Δq thereof is 2.0 nm⁻¹ or lower, the plurality of the CNTs 11a are arranged with regularity in the CNT aggregate 11 and are present in a high density, so that the contact resistance between the CNTs 11a can be made low and the low resistivity of the CNT aggregate 11 can be materialized, whereby the electroconductivity of the CNT wire 1 can further be improved.

Further since the G/D ratio, which is a ratio of the G band to the D band originated from crystallinity, of a Raman spectrum in Raman spectroscopy, is 80 or higher, defects in the CNTs 11a are few; the crystallinity is high; a low resistivity of the CNT 11a single bodies can be materialized; and the electroconductivity of the CNT wire 1 can further be improved.

In particular, since: the proportion of the total number of the CNTs having a double-walled or triple-walled structure based on the total number of the CNTs 11a constituting the CNT wire 1 is 90% or higher; the proportion of the total number of the CNTs having a double-walled structure based on the total number of the CNTs 11a constituting the CNT wire 1 is 85% or higher; the proportion of the total number of the CNTs having an average diameter of the innermost wall of 1.7 nm or smaller based on the number of the CNTs 11a constituting the CNT wire 1 is 90% or higher; the full-width at half maximum Δθ in azimuth angle by the small-angle X-ray scattering is 15° or smaller; the G/D ratio, which is a ratio of the G band to the D band originated from crystallinity, of the Raman spectrum in Raman spectroscopy, is 150 or higher; the length of the CNT aggregate 11 is 10 µm or longer; and the q value of the peak top in the (10) peak of scattering intensity by X-ray scattering indicating arrangement of the plurality of CNTs 11a, 11a, ··· is 3.0 nm⁻¹ or higher and the full-width at half maximum Δq thereof is 0.5 nm⁻¹ or lower, a further low resistivity is materialized, and the electroconductivity can remarkably be improved.

In other words, since: the proportion of the total number of the CNTs having a double-walled or triple-walled structure based on the total number of the CNTs 11a constituting the CNT wire 1 is 90% or higher; the proportion of the total number of the CNTs having a double-walled structure based on the total number of the CNTs 11a constituting the CNT wire 1 is 85% or higher; the proportion of the total number of the CNTs having an average diameter of the innermost wall of 1.7 nm or smaller based on the number of the CNTs 11a constituting the CNT wire 1 is 90% or higher; the full-width at half maximum Δθ in azimuth angle by the small-angle X-ray scattering is 15° or smaller; the G/D ratio, which is a ratio of the G band to the D band originated from crystallinity, of the Raman spectrum in Raman spectroscopy, is 150 or higher; the length of the CNT aggregate 11 is 10 µm or longer; and the CNT wire 1 has an HCP structure formed by the plurality of CNTs 11a, 11a, ··· and the length in the width direction of the entire HCP structure is 30 nm or larger, a further low resistivity is materialized, and the electroconductivity can remarkably be improved.

Hitherto, the CNT wire according to the present embodiment of the present invention has been described, but the present invention is not limited to the described embodiment and various changes and modifications may be made based on the technical idea of the present invention.

For example, the CNT wire may further have a heterogeneous element(s) or a molecule(s) doped in at least one of the inside of the CNTs and between the CNTs. As the dopant, there can be selected one selected from the group consisting of lithium (Li), sodium (Na), potassium (K), rubidium (Rb), cesium (Cs), strontium (Sr), barium (Ba), fluorine (F), chlorine (Cl), bromine (Br), iodine (I) and nitric acid, or a plurality thereof. By doping the CNT wire 1 with the heterogeneous element(s) or the molecule(s), the electroconductivity of the CNT wire 1 can further be improved.

Further there may be constituted a coated CNT wire having the CNT wire according to the above embodiment and a coating layer to coat the outer periphery of the CNT wire. In particular, the CNT wire according to the present embodiment is suitable as a material for wires for electric wires to transmit electric powers and signals, and is more suitable as a material for wires for electric wires to be mounted on moving bodies such as four-wheel vehicles. This is because the weight reduction is made more than in metal electric wires and the improvement in fuel efficiency is expected.

As a material of the insulating coating layer, there can be used a material used for insulating coating layers of coated electric wires using a metal as the core wire; and examples thereof include thermoplastic resins and thermosetting resins. Examples of the thermoplastic resins include polytetrafluoroethylene (PTFE), polyethylene, polypropylene, polyacetal, polystyrene, polycarbonate, polyamide, polyvinyl chloride, polymethyl methacrylate and polyurethane. Examples of the thermosetting resins include polyimide and phenol resins. These may be used singly or as a suitable mixture of two or more.

Further there may be constituted wire harnesses having at least one coated CNT electric wire described above.

### Examples

Hereinafter, Examples of the present invention will be described. Then, the present invention is not limited to the following Examples.

### (Example 1)

A floating catalyst vapor deposition (CCVD) method was used. A raw material solution L containing decahydronaphthalene as a carbon source, ferrocene as a catalyst and thiophene as a reaction accelerator in respective volume ratios of 100 : 4 : 1 was supplied by spray atomizing in the inside of an alumina pipe of φ60 mm in inner diameter and 1,600 mm in length, heated at 1,300°C by an electric furnace. As a carrier gas, hydrogen was supplied at 9.5 L/min. Obtained CNTs were collected in a sheet form by a collecting machine, and gathered to manufacture CNT aggregates, which were further bundled to thereby manufacture a CNT wire. The obtained CNT wire was heated under atmospheric pressure at 500°C, and further subjected to an acid treatment to carry out purity enhancement.

Alternatively, a CNT wire was obtained by a dry spinning method (Japanese Patent No. 5819888), in which the CNTs fabricated by the above floating catalyst vapor deposition method are directly spun, or a wet spinning method (Japanese Patent No. 5135620, Japanese Patent No. 5131571, Japanese Patent No. 5350635).

### (Example 2)

A CNT wire was obtained by the same method as in Example 1, except for carrying out the heating under atmospheric pressure at 400°C.

### (Example 3)

A CNT wire was obtained by the same method as in Example 1, except for alternating the volume ratios in the above raw materials of CCVD to 100 : 1 : 0.01.

### (Example 4)

A CNT wire was obtained by the same method as in Example 1, except for alternating the volume ratios in the above raw materials of CCVD to 100 : 1 : 0.01, and carrying out the heating under atmospheric pressure at 400°C.

### (Example 5)

A CNT wire was obtained by the same method as in Example 1, except for alternating the volume ratios in the above raw materials of CCVD to 100 : 2 : 1.

### (Example 6)

A CNT wire was obtained by the same method as in Example 1, except for alternating the volume ratios in the above raw materials of CCVD to 100 : 2 : 1, and carrying out the heating under atmospheric pressure at 400°C.

### (Example 7)

A CNT wire was obtained by the same method as in Example 1, except for alternating the volume ratios in the above raw materials of CCVD to 100 : 2 : 1, making the firing temperature to be 1,100°C, and carrying out the heating under atmospheric pressure at 400°C.

### (Example 8)

A CNT wire was obtained by the same method as in Example 1, except for alternating the volume ratios in the above raw materials of CCVD to 100 : 2 : 1, making the firing temperature to be 1,200°C, and carrying out the heating under atmospheric pressure at 400°C.

### (Example 9)

Then, by using a floating catalyst vapor deposition (CCVD) method, carbon nanotubes were synthesized by a horizontal tubular electric furnace. The temperature of the electric furnace was set at 1,000°C to 1,500°C. In the electric furnace, there was installed a quartz tube of φ10 mm to 60 mm in inner diameter and 2,000 mm in length.

With respect to starting materials, as a carbon source, decahydronaphthalene alone was used; as a catalyst raw material, ferrocene alone was used; and as a reaction accelerator, thiophene alone was used. There was prepared a raw material solution L containing these substances in respective molar ratios of carbon source : catalyst raw material: reaction accelerator = 100 : 1.5 : 1.5.

The raw material solution was misted by spraying, and charge into a vaporizer.

The vaporized raw material was blown in the quartz tube heated with hydrogen as a carrier gas to thereby synthesize CNTs. The hydrogen flow volume at this time was 9.5 L/min.

The synthesized CNTs were collected as aggregates in a collecting box; the collected CNTs were enclosed with water in a high-pressure vessel, and heated at 200°C for 3 hours. Thereafter, the CNTs were fired under atmospheric pressure at 500°C for 30 minutes, and after the firing, cleared of the metal catalyst with hydrochloric acid to refine the CNTs. After the refinement, the CNTs were annealed in an inert atmosphere (Ar) at 1,500°C for 0.5 hours.

Then, the annealed CNTs were dispersed under ultrasonic waves in fuming nitric acid so as to make a concentration of 0.1 to 20% by weight. The dispersion liquid was passed under pressure through a ceramic tube of φ20 µm. The ceramic tube was installed in the state that its outlet potion was immersed in a coagulant (water); and by blowing the dispersion liquid directly into the water, the spouted-in CNTs were converted into wires in the water to thereby obtain a CNT wire.

### (Example 10)

A CNT wire was obtained as in Example 9, except for, after firing the CNTs, carrying out annealing in an inert atmosphere (Ar) at 1,500°C for 1 hour.

### (Example 11)

A CNT wire was obtained as in Example 9, except for, after firing the CNTs, carrying out annealing in an inert atmosphere (Ar) at 1,800°C for 1 hour.

### (Example 12)

A CNT wire was obtained as in Example 9, except for using hexane and ethylene gas as carbon sources for synthesis. Hexane, ferrocene and thiophene in respective ratios of 100 : 1.5 : 1.5 were charged in the reaction furnace; and ethylene gas was blown at 100 mL/min in the furnace together with hydrogen gas.

### (Example 13)

A CNT wire was obtained as in Example 9, except for using cyclohexane and ethylene gas as carbon sources for the synthesis. Cyclohexane, ferrocene and thiophene in respective ratios of 100 : 1.5 : 1.5 were charged in the reaction furnace; and ethylene gas was blown at 100 mL/min in the furnace together with hydrogen gas.

### (Example 14)

A CNT wire was obtained as in Example 9, except for using decahydronaphthalene and ethylene gas as carbon sources for the synthesis. Decahydronaphthalene, ferrocene and thiophene in respective ratios of 100 : 1.5 : 1.5 were charged in the reaction furnace; and ethylene gas was blown at 100 mL/min in the furnace together with hydrogen gas.

### (Example 15)

A CNT wire was obtained as in Example 9, except for using the iron catalyst particles of 2 nm in average diameter for the synthesis, making the diameter of the reaction tube (quartz tube) small to φ20 mm, and altering the flow volume (hydrogen flow volume) of the carrier gas to 9.5 L/min.

### (Example 16)

A CNT wire was obtained as in Example 15, except for using the iron catalyst particles of 1 nm in average diameter for the synthesis.

### (Example 17)

A CNT wire was obtained as in Example 9, except for dispersing the annealed CNTs so as to make a concentration of 7% by weight in a concentrated sulfuric acid as a solvent, and forming the CNTs linearly.

### (Example 18)

A CNT wire was obtained as in Example 9, except for dispersing, under ultrasonic waves, the annealed CNTs so as to make a concentration of 13% by weight in a concentrated sulfuric acid as a solvent, and forming the CNTs linearly.

### (Example 19)

A CNT wire was obtained as in Example 9, except for using the iron catalyst particles of 1 nm in average diameter, and making the number density of the iron catalyst particles in the furnace to be twice that of Example 9 for the synthesis. The number density of the catalyst particles in the furnace means a density of the catalyst particles distributing in a space in the furnace. Methods of raising the number density include the improvement of the flow rate of hydrogen, the improvement of the in-furnace temperature, the increase of the amount of a catalyst raw material charged, and utilization of a growth accelerator of the catalyst particles.

### (Example 20)

A CNT wire was obtained as in Example 9, except for using the iron catalyst particles of 1 nm in average diameter, and making the number density of the iron catalyst particles in the furnace to be three times that of Example 9 for the synthesis.

### (Example 21)

A CNT wire was obtained as in Example 9, except for using the iron catalyst particles of 1 nm in average diameter, and making the number density of the iron catalyst particles in the furnace to be four times that of Example 9 for the synthesis.

### (Example 22)

A CNT wire was synthesized by combining each condition of Examples 10 to 21. Specifically, as carbon sources, decahydronaphthalene and ethylene gas were used; and the density of the iron catalyst particles of 1 nm in average diameter was made to be four times that of Example 9, and then, the in-furnace residence time of the iron catalyst particles was prolonged from 0.1 seconds to 1 second for synthesis of CNTs; after the CNTs were fired, the CNTs were annealed in an inert atmosphere (Ar) at 1,800°C for 1 hour; and the annealed CNTs were dispersed under ultrasonic waves so as to make 13% by weight in a concentrated nitric acid as a solvent and linearly formed to thereby obtain a CNT wire.

### (Example 23)

A CNT wire was obtained as in Example 9, except for using an iron-cobalt catalyst particle as a CNT growth catalyst, in which in addition to ferrocene, cobaltocene was contained in a molar ratio of about 1/10 of ferrocene. Here, on the assumption that cobalt of cobaltocene distributed in a crystal structure of iron of the iron catalyst particle, and was not present independently, by using the iron catalyst particle, cobaltocene was added in the above molar ratio.

### (Example 24)

A CNT wire was obtained as in Example 9, except for reducing the amount of hydrogen supplied, and altering the staying time of the catalyst particles in the tubular furnace to 2 seconds.

### (Example 25)

A CNT wire was obtained as in Example 22, except for using the iron catalyst particles of 1.5 nm in average diameter for the synthesis.

### (Example 26)

A CNT wire was obtained as in Example 22, except for making the number density of the iron catalyst particles in the furnace to be three times that of Example 9 for the synthesis.

### (Example 27)

A CNT wire was obtained as in Example 22, except for using the iron catalyst particles of 2.0 nm in average diameter for the synthesis.

### (Comparative Example 1)

A CNT wire was obtained by the same method as in Example 1, except for carrying out no heating under atmospheric pressure.

### (Comparative Example 2)

A CNT wire was obtained by the same method as in Example 1, except for altering the raw material ratios of CCVD to 100 : 1 : 0.05, and reducing the number of the step of carrying out the acid treatment and shortening the acid treatment time.

### (Comparative Example 3)

A CNT wire was obtained by the same method as in Example 1, except for carrying out no heating under atmospheric pressure and nor acid treatment.

Then, for Examples 1 to 27 and Comparative Examples 1 to 3, the structure and the physical properties were measured and evaluated by the following methods.
(a) Measurements of the number of walls of the CNT constituting the CNT wire, and of the average diameter of the innermost wall thereof

The cross section of the CNT wire produced by the above condition was observed by a transmission electron microscope and analyzed; the number of walls of each of 200 CNTs was measured and the diameter of the each CNT was measured and the average diameter of the innermost walls of the CNTs was calculated.

### (b) Measurement of the full-width at half maximum Δθ in azimuth angle by SAXS

In Examples 1 to 8, by using a small angle X-ray scattering apparatus (Aichi Synchrotron, X-ray wavelength: 0.92 Å, camera length: 465 mm, beam diameter: about 300 µm, detector: R-AXIS IV++), X-ray scattering measurement was carried out and by fitting a Gauss function or a Lorentz function to an obtained azimuth plot, the full-width at half maximum Δθ was determined.

In Examples 9 to 27, by using a small angle X-ray scattering apparatus (SPring-8, X-ray wavelength: 1.24 Å, camera length: 615 mm, beam diameter: about 3.0 µm, detector: flat panel (C9732DK)), X-ray scattering measurement was carried out and by fitting a Gauss function or a Lorentz function to an obtained azimuth plot, the full-width at half maximum Δθ was determined.

### (c) Measurements of the q value of the peak top by WAXS and the full-width at half maximum Δq thereby

Wide angle X-ray scattering measurement was carried out by using a wide angle X-ray scattering apparatus (Aichi Synchrotron), and from an obtained q value-intensity graph, the q value of the peak top in the (10) peak of intensity and the full-width at half maximum Δq thereof were determined.

### (d) Measurement of the G/D ratio in the CNT wire

A Raman spectrum was obtained by measurement by a Raman spectroscopy apparatus (manufactured by Thermo Fisher Scientific Inc. apparatus name: "ALMEGA XR") under the conditions of excitation laser: 532 nm, laser intensity: dimmed to 10%, objective lens: 50 times, and exposure time: 1 second × 60 times. Then, by using spectrum analysis software "Spectra Manager" manufactured by JASCO Corp., data on 1,000 to 2,000 cm⁻¹ of the Raman spectrum were got and peak groups detected in this region were subjected to separation analysis using curve fitting. Here, a line connecting detection intensities at 1,000 cm⁻¹ and 2,000 cm⁻¹ was taken as the base line. Then, the G/D ratio was calculated from respective peak top heights (detection intensities acquired by subtracting values of the base line from peak tops) of the G band and the D band.

### (e) Measurement of the resistivity of the CNT wire

The CNT wire was connected to a resistance measuring instrument (manufactured by Keythley Instrument Inc., instrument name: "DMM2000"), and the resistance measurement using a four-terminal method was carried out. The resistivity was calculated based on the calculation formula of r = RA/L (R: resistance, A: cross-sectional area of the CNT aggregate, L: measurement length).

### (f) Measurement of the length of the CNT aggregate

The CNTs were added to sodium cholate being a dispersion liquid to make a dispersion liquid under ultrasonic waves; the dispersion liquid was picked by a syringe and dropped on a silicon substrate, and dried to thereby synthesize a CNT wire. The synthesized CNT wire was observed by a scanning electron microscope (acceleration voltage: 3.0 keV, magnification: 20,000 times). 200 to 1,000 pieces of the CNTs were observed in one-time observation; the lengths thereof were measured by image software; and a logarithmic normal distribution was fit to the acquired length distribution and the average length was measured as the length of the CNT aggregate.

### (g) Measurement of the length in the width direction of the entire HCP structure

The full-width at half maximum Δq of the (10) peak being a diffraction peak originated from the HCP structure by WAXS measurement was calculated and the size of crystallites was determined by Scherrer's equation. The crystallite mentioned here meant a largest collection of a plurality of the CNTs which could be regarded as a single crystal. Then, the size of the crystallites determined in the above was a value equivalent to the diameter of the CNT aggregate, and this value was taken as the length in the width direction of the entire HCP structure.

Measurement and calculation results of the above Examples 1 to 27 and Comparative Examples 1 to 3 are shown in Table 1 and Table 2.

### [Table 1]

**[Table 1]**

| | Proportion of CNT having a double-walled or triple-walled structure | Average diameter of the innermost wall | Proportion of CNT having an average diameter of 0.7 nm to 1.7 nm | SAXS azimuth angle full-width al half maximum Δθ | q Value of XRD peak top | XRD full-width at half maximum Δq | Raman G/D ratio | Resistivity |
|---|---|---|---|---|---|---|---|---|
| | [%] | [nm] | [%] | [°] | [nm⁻¹] | [nm⁻¹] | [-] | [Ω·cm] |
| Example 1 | 89% | 1,2 | 95% | 25 | 3,3 | 0,3 | 165 | 5.8×10⁻⁶ |
| Example 2 | 88% | 1,2 | 94% | 48 | 3,3 | 0,3 | 160 | 8.8×10⁻⁶ |
| Example 3 | 85% | 1,5 | 78% | 27 | 2,5 | 0,3 | 161 | 7.3×10⁻⁶ |
| Example 4 | 87% | 1,5 | 76% | 55 | 2,5 | 0,3 | 158 | 9.2×10⁻⁶ |
| Example 5 | 83% | 1,0 | 77% | 28 | 3,1 | 0,3 | 160 | 6.0×10⁻⁶ |
| Example 6 | 84% | 1,0 | 76% | 58 | 3,1 | 0,3 | 155 | 9.5×10⁻⁶ |
| Example 7 | 88% | 1,2 | 94% | 27 | 3,3 | 0,3 | 62 | 9,9×10⁻⁶ |
| Example 8 | 87% | 1,2 | 93% | 28 | 3,3 | 0,3 | 105 | 6.5×10⁻⁶ |

### [Table 2]

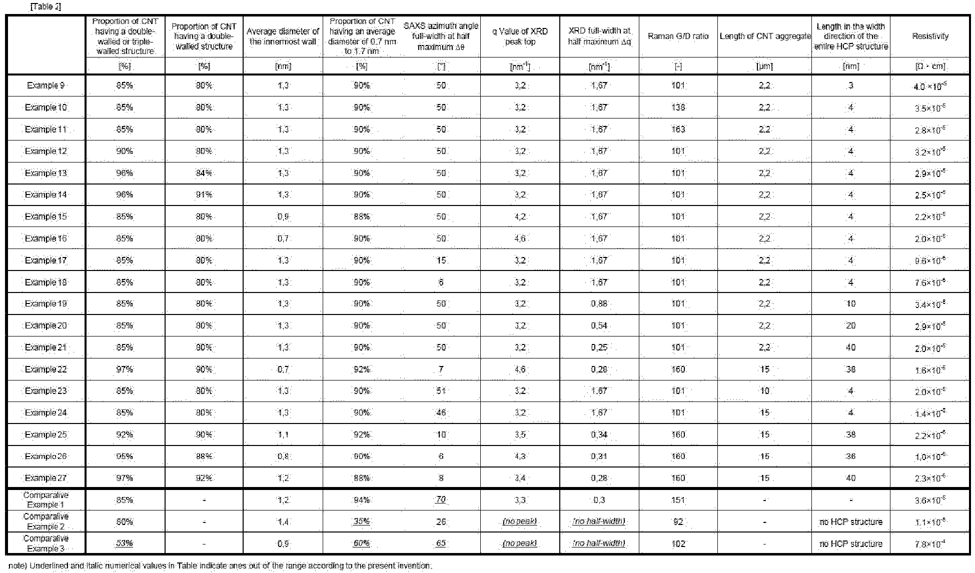

As indicated in Table 1, in Examples 1 and 2, it was found that: the proportion of the total number of CNTs having a double-walled or triple-walled structure based on the number of the CNTs constituting the CNT wire was in the range according to the present invention; the proportion of the total number of the CNTs having an average diameter of the innermost wall of 0.7 nm or larger and 1.7 nm or smaller based on the number of the CNTs constituting the CNT wire was in the range according to the present invention; the full-width at half maximum Δθ in azimuth angle in azimuth intensity distribution by SAXS indicating orientation of the plurality of CNT aggregates was in the range according to the present invention; and a low resistivity was attained. It was found that in particular, in Example 1, when the full-width at half maximum Δθ by SAXS was 30° or smaller, a lower resistivity was attained than in Example 2.

In Example 3, it was found that although the average diameter of the innermost wall was larger than in Examples 1 and 2, the full-width at half maximum Δθ by SAXS had the similar value as in Example 1, and a lower resistivity was attained than in Example 2.

In Example 4, it was found that although the average diameter of the innermost wall was larger than in Examples 1 and 2 and the full-width at half maximum Δθ by SAXS was larger than in Example 3, the full-width at half maximum Δθ was in the range according to the present invention, and a low resistivity was attained.

In Example 5, it was found that although the average diameter of the innermost wall was smaller and the proportion of the CNTs of 0.7 nm or larger and 1.7 nm or smaller in average diameter was lower than in Examples 1 and 2 and the full-width at half maximum Δθ by SAXS had the similar value as in Example 1, and the similar resistivity as in Example 1 was attained.

In Example 6, it was found that although the average diameter of the innermost wall was smaller and the proportion of the CNTs of 0.7 nm or larger and 1.7 nm or smaller in average diameter was lower than in Examples 1 and 2; and the full-width at half maximum Δθ by SAXS was larger than in Example 3, the full-width at half maximum Δθ was in the range according to the present invention, and a low resistivity was attained.

In Example 7, it was found that although the proportion of the CNTs having a double-walled or triple-walled structure, the average diameter of the innermost wall and the full-width at half maximum Δθ by SAXS were nearly the similar values as in Example 1; the G/D ratio in the Raman spectrum was a value of about 80, which was lower than in Example 1; and the resistivity was higher than in Example 1, a low resistivity was attained.

In Example 8, it was found that the proportion of the CNTs having a double-walled or triple-walled structure, the average diameter of the innermost wall and the full-width at half maximum Δθ by SAXS were nearly the similar values as in Example 1; the G/D ratio in the Raman spectrum was a value of about 100, which was higher than in Example 7; and a lower resistivity than in Example 7 was attained.

Then, as indicated in Table 2, in Example 9, it was found that the proportion of the total number of CNTs having a double-walled or triple-walled structure based on the number of the CNTs constituting the CNT wire was in the range according to the present invention; the proportion of the total number of the CNTs having an average diameter of the innermost wall of 0.7 nm or larger and 1.7 nm or smaller based on the number of the CNTs constituting the CNT wire was in the range according to the present invention; the full-width at half maximum Δθ in azimuth angle in azimuth intensity distribution by SAXS indicating orientation of the plurality of the CNT aggregates was in the range according to the present invention; and a low resistivity was attained.

In Example 10, the G/D ratio in the Raman spectrum was higher and a lower resistivity was attained than in Example 9.

In Example 11, the G/D ratio in the Raman spectrum was higher and a further lower resistivity was attained than in Example 10.

In Example 12, the proportion of the CNTs having a double-walled or triple-walled structure was higher and a lower resistivity was attained than in Example 9.

In Example 13, the proportion of the CNTs having a double-walled or triple-walled structure and the proportion of the CNTs having a double-walled structure were higher and a lower resistivity was attained than in Example 12.

In Example 14, the proportion of the CNTs having a double-walled structure was higher and a lower resistivity was attained than in Example 14.

In Example 15, although the proportion of the CNTs of 0.7 nm or larger and 1.7 nm or smaller in average diameter was slightly lower than in Example 9, the average diameter of the innermost wall was smaller than in Example 9; and the q value of the peak top by WAXS was higher and a lower resistivity was attained than in Example 9.

In Example 16, the average diameter of the innermost wall was smaller than in Example 15; the proportion of the CNTs of 0.7 nm or larger and 1.7 nm or smaller in average diameter was higher than in Example 15; and the q value of the peak top by WAXS was higher and a lower resistivity was attained than in Example 15.

In Example 17, the full-width at half maximum Δθ by SAXS was smaller than in Example 9, and a remarkably low resistivity was attained.

In Example 18, the full-width at half maximum Δθ by SAXS was smaller and a lower resistivity was attained than in Example 17.

In Example 19, the full-width at half maximum Δq by WAXS was higher than in Example 9; and the length in the width direction of the entire HCP structure was larger and a lower resistivity was attained than in Example 9.

In Example 20, the full-width at half maximum Δq by WAXS was higher than in Example 19; and the length in the width direction of the entire HCP structure was large, and a lower resistivity was attained than in Example 19.

In Example 21, the full-width at half maximum Δq by WAXS was higher than in Example 20; and the length in the width direction of the entire HCP structure was larger and a lower resistivity was attained than in Example 20.

In Example 22, the proportion of the CNTs having a double-walled or triple-walled structure and the proportion of the CNTs having a double-walled structure were higher than in Example 9; the average diameter of the innermost wall was smaller than in Example 9; the proportion of the CNTs of 0.7 nm or larger and 1.7 nm or smaller in average diameter was higher than in Example 9; the full-width at half maximum Δq by WAXS was smaller than in Example 9; the q value of the peak top by WAXS was higher than in Example 9; the full-width at half maximum Δq by WAXS was smaller than in Example 9; the G/D ratio in the Raman spectrum was higher than in Example 9, the length in the width direction of the entire HCP structure was larger than in Example 9; and a remarkably low resistivity was attained.

In Example 23, the length of the CNT aggregate was larger than in Example 9; and the length in the width direction of the entire HCP structure was larger and a lower resistivity was attained than in Example 9.

In Example 24, the full-width at half maximum Δθ by SAXS was smaller than in Example 9; and the length of the CNT aggregate was larger and a lower resistivity was attained than in Example 9.

In Examples 25 to 27, the resistivities were nearly the same as in Example 22, and remarkably low resistivities were attained.

As described above, among Examples 9 to 27, in which all the conditions of Examples 1 to 8 were satisfied, and the fabrications were carried out by different manufacturing methods, in Examples 17, 18, 22, and 25 to 27, in which the full-width at half maximum Δθ by SAXS became 15° or smaller, the resistivity became largely low; particularly in Examples 22, and 25 to 27, in which: the proportion of the total number of the carbon nanotubes having a double-walled or triple-walled structure based on the number of the carbon nanotubes constituting the carbon nanotube wire was 90% or higher; the proportion of the total number of the carbon nanotubes having a double-walled structure based on the number of the carbon nanotubes constituting the carbon nanotube wire was 85% or higher; the proportion of the total number of the carbon nanotubes having an average diameter of the innermost wall of 1.7 nm or smaller based on the number of the carbon nanotubes constituting the carbon nanotube wire was 90% or higher; the G/D ratio, which is a ratio of the G band to the D band originated from crystallinity, of the Raman spectrum in Raman spectroscopy, was 150 or higher; and the length of the carbon nanotube aggregate was 10 µm or longer; the carbon nanotube wire had an HCP structure formed by the plurality of carbon nanotubes, and the length in the width direction of the entire HCP structure was 30 nm or larger, the resistivity reduced largely low.

By contrast, in Comparative Example 1, it was found that the full-width at half maximum Δθ by SAXS was out of the range of the present invention and the resistivity was higher than in Examples 1 to 8.

In Comparative Example 2, it was found that since the proportion of the CNTs of 0.7 nm to 1.7 nm in average diameter, the q value of the XRD peak top, and the XRD full-width at half maximum Δq were out of the range of the present invention and the variation in the diameter of the CNTs was large, the HCP structure was not able to be formed and the (10) peak of intensity by the X-ray scattering was not able to be confirmed, and the resistivity became higher than in Examples 1 to 8.

Further in Comparative Example 3, it was found that since the proportion of the CNTs having a double-walled or double-walled structure, the proportion of the CNTs of 0.7 nm to 1.7 nm in average diameter, the SAXS full-width at half maximum Δθ, the q value of the XRD peak top, and the XRD full-width at half maximum Δq were out of the range of the present invention and the CNTs having a single-walled structure were much contained, the average diameter became small; the HCP structure was not able to be formed; the (10) peak of intensity by the X-ray scattering was not able to be confirmed; and the resistivity became higher than in Examples 1 to 8.

### List of Reference Signs

1 CNT wire
11 CNT aggregate
11a CNT
T1 cylindrical body
T2 cylindrical body

## Claims

1. A carbon nanotube wire, being formed from a single carbon nanotube aggregate constituted of a plurality of carbon nanotubes each having a single- or multi-walled structure, or formed by bundling a plurality of the carbon nanotube aggregates,
wherein a proportion of a total number of the carbon nanotubes having a double-walled or triple-walled structure based on a total number of the carbon nanotubes constituting the carbon nanotube wire is 75% or higher;
a proportion of a total number of the carbon nanotubes having an average diameter of the innermost wall of 1.7 nm or smaller based on the number of the carbon nanotubes constituting the carbon nanotube wire is 75% or higher; and
a full-width at half maximum Δθ in azimuth angle in azimuth intensity distribution by small-angle X-ray scattering indicating orientation of the plurality of carbon nanotube aggregates is 60° or smaller.

2. The carbon nanotube wire according to claim 1, **characterized in that** the full-width at half maximum Δθ in azimuth angle by small-angle X-ray scattering is 30° or smaller.

3. The carbon nanotube wire according to claim 2, **characterized in that** the full-width at half maximum Δθ in azimuth angle by small-angle X-ray scattering is 15° or smaller.

4. The carbon nanotube wire according to claim 1, **characterized in that** the proportion of the total number of the carbon nanotubes having a double-walled or triple-walled structure based on the total number of the carbon nanotubes constituting the carbon nanotube wire is 90% or higher.

5. The carbon nanotube wire according to claim 1, **characterized in that** the proportion of the total number of the carbon nanotubes having a double-walled structure based on the total number of the carbon nanotubes constituting the carbon nanotube wire is 90% or higher.

6. The carbon nanotube wire according to claim 1, **characterized in that** the carbon nanotube wire has an HCP (hexagonal close-packed) structure formed by the plurality of carbon nanotubes, and a length in the width direction of the entire HCP (hexagonal close-packed) structure is 3 nm or larger.

7. The carbon nanotube wire according to claim 1, **characterized in that** a q value of the peak top in the (10) peak of scattering intensity by X-ray scattering is 2.0 nm<-1> or higher, and a full-width at half maximum Δq thereof is 2.0 nm<-1> or lower.

8. The carbon nanotube wire according to claim 1, **characterized in that** a G/D ratio, which is a ratio of the G band to the D band originated from crystallinity, of a Raman spectrum in Raman spectroscopy, is 80 or higher.

9. The carbon nanotube wire according to claim 1, **characterized in that** a length of the carbon nanotube aggregate is 10 µm or longer.

10. The carbon nanotube wire according to claim 1, **characterized in that**:
the proportion of the total number of the carbon nanotubes having a double-walled or triple-walled structure based on the total number of the carbon nanotubes constituting the carbon nanotube wire is 90% or higher;
the proportion of the total number of the carbon nanotubes having a double-walled structure based on the total number of the carbon nanotubes constituting the carbon nanotube wire is 85% or higher;
the proportion of the total number of the carbon nanotubes having an average diameter of the innermost wall of 1.7 nm or smaller based on the number of the carbon nanotubes constituting the carbon nanotube wire is 90% or higher;
the full-width at half maximum Δθ in azimuth angle by the small-angle X-ray scattering is 15° or smaller;
a G/D ratio, which is a ratio of the G band to the D band originated from crystallinity, of a Raman spectrum in Raman spectroscopy, is 150 or higher;
a length of the carbon nanotube aggregate is 10 µm or longer; and
a q value of the peak top in the (10) peak of scattering intensity by X-ray scattering indicating arrangement of the plurality of carbon nanotubes is 3.0 nm<-1> or higher, and a full-width at half maximum Δq thereof is 0.5 nm<-1> or lower.

11. The carbon nanotube wire according to claim 1, **characterized in that**:
the proportion of the total number of the carbon nanotubes having a double-walled or triple-walled structure based on the number of the carbon nanotubes constituting the carbon nanotube wire is 90% or higher;
the proportion of the total number of the carbon nanotubes having a double-walled structure based on the number of the carbon nanotubes constituting the carbon nanotube wire is 85% or higher;
the proportion of the total number of the carbon nanotubes having an average diameter of the innermost wall of 1.7 nm or smaller based on the number of the carbon nanotubes constituting the carbon nanotube wire is 90% or higher;
the full-width at half maximum Δθ in azimuth angle by the small-angle X-ray scattering is 15° or smaller;
a G/D ratio, which is a ratio of the G band to the D band originated from crystallinity, of a Raman spectrum in Raman spectroscopy, is 150 or higher;
a length of the carbon nanotube aggregate is 10 µm or longer; and
the carbon nanotube wire has an HCP (hexagonal close-packed) structure formed by the plurality of carbon nanotubes, and a length in the width direction of the entire HCP (hexagonal close-packed) structure is 30 nm or larger.

12. A method for manufacturing a carbon nanotube according to claim 1, comprising manufacturing the carbon nanotube through each step of a synthesis step, a refinement step and a heat treatment step,
the method being **characterized in that** in the heat treatment step, a carbon nanotube obtained in the refinement step is subjected to a heat treatment in an inert atmosphere at 1,000 to 2,200°C for 30 minutes to 5 hours.

13. The method for manufacturing a carbon nanotube according to claim 12, **characterized in that** in the synthesis step, a carbon nanotube is synthesized by using decahydronaphthalene as a carbon source and a metal particle having a diameter of 2 nm or smaller as a catalyst.

14. The method for manufacturing a carbon nanotube according to claim 12 or 13, **characterized in that** in the synthesis step, a synthesis temperature of the carbon nanotube is 1,300 to 1,500°C, and Co is mixed in the catalyst.

15. A method for manufacturing a carbon nanotube wire according to claim 12, **characterized in that** after a plurality of carbon nanotubes are dispersed in a concentration of 0.1 to 20% by weight in a strong acid, the plurality of carbon nanotubes are aggregated.

16. The method for manufacturing a carbon nanotube wire according to claim 15, **characterized in that** the strong acid contains at least one of fuming sulfuric acid and fuming nitric acid.

## Patentansprüche

1. Kohlenstoffnanoröhrchendraht, der aus einem einzelnen Kohlenstoffnanoröhrchenaggregat geformt ist, das aus einer Vielzahl von Kohlenstoffnanoröhrchen gebildet ist, die jeweils eine ein- oder mehrwandige Struktur aufweisen, oder durch Bündeln einer Vielzahl der Kohlenstoffnanoröhrchenaggregate geformt ist,
wobei ein Anteil einer Gesamtzahl der Kohlenstoffnanoröhrchen, die eine doppelwandige oder dreiwandige Struktur aufweisen, basierend auf einer Gesamtzahl der Kohlenstoffnanoröhrchen, die den Kohlenstoffnanoröhrchendraht bilden, 75 % oder höher ist;
ein Anteil einer Gesamtzahl der Kohlenstoffnanoröhrchen, die einen durchschnittlichen Durchmesser der innersten Wand von 1,7 nm oder weniger aufweisen, basierend auf der Zahl der Kohlenstoffnanoröhrchen, die den Kohlenstoffnanoröhrchendraht bilden, 75 % oder höher ist; und
eine Halbwertsbreite Δθ im Azimutwinkel in Azimutintensitätsverteilung durch Kleinwinkel-Röntgenstreuung, die die Ausrichtung der Vielzahl der Kohlenstoffnanoröhrchenaggregate anzeigt, 60° oder weniger ist.

2. Kohlenstoffnanoröhrchendraht nach Anspruch 1, **dadurch gekennzeichnet, dass** die Halbwertsbreite Δθ im Azimutwinkel durch Kleinwinkel-Röntgenstreuung 30° oder weniger ist.

3. Kohlenstoffnanoröhrchendraht nach Anspruch 2, **dadurch gekennzeichnet, dass** die Halbwertsbreite Δθ im Azimutwinkel durch Kleinwinkel-Röntgenstreuung 15° oder weniger ist.

4. Kohlenstoffnanoröhrchendraht nach Anspruch 1, **dadurch gekennzeichnet, dass** der Anteil der Gesamtzahl der Kohlenstoffnanoröhrchen, die eine doppelwandige oder dreiwandige Struktur aufweisen, basierend auf der Gesamtzahl der Kohlenstoffnanoröhrchen, die den Kohlenstoffnanoröhrchendraht formen, 90 % oder höher ist.

5. Kohlenstoffnanoröhrchendraht nach Anspruch 1, **dadurch gekennzeichnet, dass** der Anteil der Gesamtzahl der Kohlenstoffnanoröhrchen, die eine doppelwandige Struktur aufweisen, basierend auf der Gesamtzahl der Kohlenstoffnanoröhrchen, die den Kohlenstoffnanoröhrchendraht bilden, 90 % oder höher ist.

6. Kohlenstoffnanoröhrchendraht nach Anspruch 1, **dadurch gekennzeichnet, dass** der Kohlenstoffnanoröhrchendraht eine HCP(hexagonal dichteste Kugelpackung)-Struktur, die durch die Vielzahl der Kohlenstoffnanoröhrchen geformt ist, aufweist und eine Länge in der Breiterichtung der gesamten HCP(hexagonal dichteste Kugelpackung)-Struktur 3 nm oder mehr beträgt.

7. Kohlenstoffnanoröhrchendraht nach Anspruch 1, **dadurch gekennzeichnet, dass** ein Wert q der Peakspitze in dem (10) Peak der Streuungsintensität durch Röntgenstreuung 2,0 nm<-1> oder höher ist und eine Halbwertsbreite Δq dessen 2,0 nm<-1> oder niedriger ist.

8. Kohlenstoffnanoröhrchendraht nach Anspruch 1, **dadurch gekennzeichnet, dass** ein G/D-Verhältnis, das ein Verhältnis von dem G-Band zu dem D-Band ist, das von der Kristallinität eines Raman-Spektrums in Raman-Spektroskopie stammt, bei 80 oder höher liegt.

9. Kohlenstoffnanoröhrchendraht nach Anspruch 1, **dadurch gekennzeichnet, dass** eine Länge des Kohlenstoffnanoröhrchenaggregats 10 µm oder länger beträgt.

10. Kohlenstoffnanoröhrchendraht nach Anspruch 1, **dadurch gekennzeichnet, dass**:
der Anteil der Gesamtzahl der Kohlenstoffnanoröhrchen, die eine doppelwandige oder dreiwandige Struktur aufweisen, basierend auf der Gesamtzahl der Kohlenstoffnanoröhrchen, die den Kohlenstoffnanoröhrchendraht bilden, 90 % oder höher ist;
der Anteil der Gesamtzahl der Kohlenstoffnanoröhrchen, die eine doppelwandige Struktur aufweisen, basierend auf der Gesamtzahl der Kohlenstoffnanoröhrchen, die den Kohlenstoffnanoröhrchendraht bilden, 85 % oder höher ist;
der Anteil der Gesamtzahl der Kohlenstoffnanoröhrchen, die einen durchschnittlichen Durchmesser der innersten Wand von 1,7 nm oder weniger aufweisen, basierend auf der Zahl der Kohlenstoffnanoröhrchen, die den Kohlenstoffnanoröhrchendraht bilden, 90 % oder höher ist;
die Halbwertsbreite Δθ im Azimutwinkel durch die Kleinwinkel-Röntgenstreuung 15° oder weniger ist;
ein G/D-Verhältnis, das ein Verhältnis von dem G-Band zu dem D-Band ist, das von der Kristallinität eines Raman-Spektrums in Raman-Spektroskopie stammt, bei 150 oder höher liegt;
eine Länge des Kohlenstoffnanoröhrchenaggregats 10 µm oder länger beträgt; und
ein Wert q der Peakspitze in dem (10) Peak der Streuungsintensität durch Röntgenstreuung, die eine Anordnung der Vielzahl von Kohlenstoffnanoröhrchen anzeigt, 3,0 nm<-1> oder höher ist und eine Halbwertsbreite Δq dessen 0,5 nm<-1> oder niedriger ist.

11. Kohlenstoffnanoröhrchendraht nach Anspruch 1, **dadurch gekennzeichnet, dass**:
der Anteil der Gesamtzahl der Kohlenstoffnanoröhrchen, die eine doppelwandige oder dreiwandige Struktur aufweisen, basierend auf der Zahl der Kohlenstoffnanoröhrchen, die den Kohlenstoffnanoröhrchendraht bilden, 90 % oder höher ist;
der Anteil der Gesamtzahl der Kohlenstoffnanoröhrchen, die eine doppelwandige Struktur aufweisen, basierend auf der Zahl der Kohlenstoffnanoröhrchen, die den Kohlenstoffnanoröhrchendraht bilden, 85 % oder höher ist;
der Anteil der Gesamtzahl der Kohlenstoffnanoröhrchen, die einen durchschnittlichen Durchmesser der innersten Wand von 1,7 nm oder weniger aufweisen, basierend auf der Zahl der Kohlenstoffnanoröhrchen, die den Kohlenstoffnanoröhrchendraht bilden, 90 % oder höher ist;
die Halbwertsbreite Δθ im Azimutwinkel durch die Kleinwinkel-Röntgenstreuung 15° oder weniger ist;
ein G/D-Verhältnis, das ein Verhältnis von dem G-Band zu dem D-Band ist, das von der Kristallinität eines Raman-Spektrums in Raman-Spektroskopie stammt, bei 150 oder höher liegt;
eine Länge des Kohlenstoffnanoröhrchenaggregats 10 µm oder länger beträgt; und
der Kohlenstoffnanoröhrchendraht eine HCP(hexagonal dichteste Kugelpackung)-Struktur, die durch die Vielzahl der Kohlenstoffnanoröhrchen geformt ist, aufweist und eine Länge in der Breiterichtung der gesamten HCP(hexagonal dichteste Kugelpackung)-Struktur 30 nm oder mehr beträgt.

12. Verfahren zur Herstellung eines Kohlenstoffnanoröhrchens nach Anspruch 1, umfassend eine Herstellung des Kohlenstoffnanoröhrchens durch jeden Schritt eines Syntheseschritts, eines Verfeinerungsschritts und eines Wärmebehandlungsschritts,
wobei das Verfahren **dadurch gekennzeichnet ist, dass** in dem Wärmebehandlungsschritt ein Kohlenstoffnanoröhrchen, das in dem Verfeinerungsschritt erlangt wurde, einer Wärmebehandlung in einer inerten Atmosphäre bei 1.000 bis 2.200 °C für 30 Minuten bis 5 Stunden unterzogen wird.

13. Verfahren zur Herstellung eines Kohlenstoffnanoröhrchens nach Anspruch 12, **dadurch gekennzeichnet, dass** in dem Syntheseschritt ein Kohlenstoffnanoröhrchen unter Verwendung von Decahydronaphthalin als einer Kohlenstoffquelle und einem Metallpartikel, das einen Durchmesser von 2 nm oder weniger aufweist, als Katalysator synthetisiert wird.

14. Verfahren zur Herstellung eines Kohlenstoffnanoröhrchens nach Anspruch 12 oder 13, **dadurch gekennzeichnet, dass** in dem Syntheseschritt eine Synthesetemperatur des Kohlenstoffröhrchens bei 1.300 bis 1.500 °C liegt und Co in den Katalysator gemischt ist.

15. Verfahren zur Herstellung eines Kohlenstoffnanoröhrchendrahts nach Anspruch 12, **dadurch gekennzeichnet, dass**, nachdem eine Vielzahl von Kohlenstoffröhrchen mit einer Konzentration von 0,1 bis 20 Gew.-% in einer starken Säure dispergiert sind, die Vielzahl von Kohlenstoffröhrchen aggregiert sind.

16. Verfahren zur Herstellung eines Kohlenstoffnanoröhrchendrahts nach Anspruch 15, **dadurch gekennzeichnet, dass** die starke Säure mindestens eines von rauchender Schwefelsäure und rauchender Salpetersäure beinhaltet.

## Revendications

1. Fil de nanotube de carbone, étant formé à partir d'un agrégat de nanotubes de carbone unique constitué d'une pluralité de nanotubes de carbone ayant chacun une structure à une ou plusieurs parois, ou formé en regroupant une pluralité d'agrégats de nanotubes de carbone,
dans lequel une proportion d'un nombre total de nanotubes de carbone ayant une structure à double paroi ou à triple paroi sur la base d'un nombre total de nanotubes de carbone constituant le fil de nanotube de carbone est de 75 % ou plus ;
une proportion d'un nombre total des nanotubes de carbone ayant un diamètre moyen de la paroi la plus interne de 1,7 nm ou moins sur la base du nombre des nanotubes de carbone constituant le fil de nanotube de carbone est de 75 % ou plus ; et
une largeur totale à mi-hauteur Δθ dans l'angle d'azimut dans la distribution d'intensité d'azimut par diffusion de rayons X aux petits angles indiquant une orientation de la pluralité d'agrégats de nanotubes de carbone est de 60° ou moins.

2. Fil de nanotube de carbone selon la revendication 1, **caractérisé en ce que** la largeur totale à mi-hauteur Δθ dans l'angle d'azimut par diffusion de rayons X aux petits angles est de 30° ou moins.

3. Fil de nanotube de carbone selon la revendication 2, **caractérisé en ce que** la largeur totale à mi-hauteur Δθ dans l'angle d'azimut par diffusion de rayons X aux petits angles est de 15° ou moins.

4. Fil de nanotube de carbone selon la revendication 1, **caractérisé en ce que** la proportion du nombre total de nanotubes de carbone ayant une structure à double paroi ou à triple paroi sur la base du nombre total des nanotubes de carbone constituant le fil de nanotube de carbone est de 90 % ou plus.

5. Fil de nanotube de carbone selon la revendication 1, **caractérisé en ce que** la proportion du nombre total des nanotubes de carbone ayant une structure à double paroi sur la base du nombre total des nanotubes de carbone constituant le fil de nanotube de carbone est de 90 % ou plus.

6. Fil de nanotube de carbone selon la revendication 1, **caractérisé en ce que** le fil de nanotube de carbone a une structure HCP (hexagonale compacte) formée par la pluralité de nanotubes de carbone, et une longueur dans le sens de la largeur de la structure HCP (hexagonale compacte) entière est de 3 nm ou plus.

7. Fil de nanotube de carbone selon la revendication 1, **caractérisé en ce qu'**une valeur q du sommet de pic dans le (10) pic d'intensité de diffusion par diffusion de rayons X est de 2,0 nm<-1> ou plus, et une largeur totale à mi-hauteur Δq de celui-ci est de 2,0 nm<-1> ou moins.

8. Fil de nanotube de carbone selon la revendication 1, **caractérisé en ce qu'**un rapport G/D, qui est un rapport de la bande G à la bande D provenant de la cristallinité, d'un spectre de Raman en spectroscopie de Raman, est de 80 ou plus.

9. Fil de nanotube de carbone selon la revendication 1, **caractérisé en ce qu'**une longueur de l'agrégat de nanotubes de carbone est de 10 µm ou plus.

10. Fil de nanotube de carbone selon la revendication 1, **caractérisé en ce que** :
la proportion du nombre total des nanotubes de carbone ayant une structure à double paroi ou triple paroi sur la base du nombre total des nanotubes de carbone constituant le fil de nanotube de carbone est de 90 % ou plus ;
la proportion du nombre total des nanotubes de carbone ayant une structure à double paroi sur la base du nombre total des nanotubes de carbone constituant le fil de nanotube de carbone est de 85 % ou plus ;
la proportion du nombre total des nanotubes de carbone ayant un diamètre moyen de la paroi la plus interne de 1,7 nm ou moins sur la base du nombre des nanotubes de carbone constituant le fil de nanotube de carbone est de 90 % ou plus ;
la largeur totale à mi-hauteur Δθ dans l'angle d'azimut par la diffusion de rayons X aux petits angles est de 15° ou moins ;
un rapport G/D, qui est un rapport de la bande G à la bande D provenant de la cristallinité, d'un spectre de Raman en spectroscopie de Raman, est de 150 ou plus ;
une longueur de l'agrégat de nanotubes de carbone est de 10 um ou plus ; et
une valeur q du sommet de pic dans le (10) pic d'intensité de diffusion par diffusion de rayons X indiquant l'agencement de la pluralité de nanotubes de carbone est de 3,0 nm<-1> ou plus, et une largeur totale à mi-hauteur Δq de celui-ci est 0,5 nm<-1> ou moins.

11. Fil de nanotube de carbone selon la revendication 1, **caractérisé en ce que** :
la proportion du nombre total des nanotubes de carbone ayant une structure à double paroi ou triple paroi sur la base du nombre des nanotubes de carbone constituant le fil de nanotube de carbone est de 90 % ou plus ;
la proportion du nombre total des nanotubes de carbone ayant une structure à double paroi sur la base du nombre des nanotubes de carbone constituant le fil de nanotube de carbone est de 85 % ou plus ;
la proportion du nombre total des nanotubes de carbone ayant un diamètre moyen de la paroi la plus interne de 1,7 nm ou moins sur la base du nombre des nanotubes de carbone constituant le fil de nanotube de carbone est de 90 % ou plus ;
la largeur totale à mi-hauteur Δθ dans l'angle d'azimut par la diffusion de rayons X aux petits angles est de 15° ou moins ;
un rapport G/D, qui est un rapport de la bande G à la bande D provenant de la cristallinité d'un spectre de Raman en spectroscopie de Raman, est de 150 ou plus ;
une longueur de l'agrégat de nanotubes de carbone est de 10 um ou plus ; et
le fil de nanotube de carbone a une structure HCP (hexagonale compacte) formée par la pluralité de nanotubes de carbone, et une longueur dans le sens de la largeur de la structure HCP (hexagonale compacte) entière est de 30 nm ou plus.

12. Procédé de fabrication d'un nanotube de carbone selon la revendication 1, comprenant la fabrication du nanotube de carbone à travers chaque étape d'une étape de synthèse, une étape de raffinement et une étape de traitement thermique,
le procédé étant **caractérisé en ce que** lors de l'étape de traitement thermique, un nanotube de carbone obtenu dans l'étape de raffinement est soumis à un traitement thermique dans une atmosphère inerte entre 1 000 et 2 200 °C pendant 30 minutes à 5 heures.

13. Procédé de fabrication d'un nanotube de carbone selon la revendication 12, **caractérisé en ce que** dans l'étape de synthèse, un nanotube de carbone est synthétisé à l'aide de décahydronaphtalène comme source de carbone et d'une particule métallique ayant un diamètre de 2 nm ou moins comme catalyseur.

14. Procédé de fabrication d'un nanotube de carbone selon la revendication 12 ou 13, **caractérisé en ce que** dans l'étape de synthèse, une température de synthèse du nanotube de carbone est de 1 300 à 1 500 °C, et du Co est mélangé dans le catalyseur.

15. Procédé de fabrication d'un fil de nanotube de carbone selon la revendication 12, **caractérisé en ce qu'**après dispersion d'une pluralité de nanotubes de carbone à une concentration de 0,1 à 20 % en poids dans un acide fort, la pluralité de nanotubes de carbone sont agrégés.

16. Procédé de fabrication d'un fil de nanotube de carbone selon la revendication 15, **caractérisé en ce que** l'acide fort contient au moins un acide parmi l'acide sulfurique fumant et l'acide nitrique fumant.
